# EUROPEAN PATENT SPECIFICATION

(11) **EP 3 346 649 B1**
(45) Date of publication and mention of the grant of the patent: **04.12.2024**
(21) Application number: 17170114.7
(22) Date of filing: 09.05.2017
(51) Int. Cl.: H04W 12/08, H04W 12/50, H04W 36/22, H04W 48/18, H04W 76/11, H04W 84/12, H04W 88/12, H04W 12/67

(54) **SYSTEM AND METHOD FOR BACKHAUL CONNECTION MANAGEMENT IN A LAN**
SYSTEM UND VERFAHREN ZUR BACKHAUL-VERBINDUNGSVERWALTUNG IN EINEM LAN
SYSTÈME ET PROCÉDÉ DE GESTION DE CONNEXION DE LIAISON TERRESTRE DANS UN RÉSEAU LOCAL

(30) Priority: 09.01.2017 TW 106100609
(43) Date of publication of application: 11.07.2018
(73) Proprietor: Arcadyan Technology Corporation, Hsinchu City 30071 (TW)
(72) Inventor: HSIEH, Tsung-Hsien, Hsinchu City 30071 (TW); LEE, Chih-Fang, Tainan City 717 (TW)
(74) Representative: Viering, Jentschura & Partner mbB Patent- und Rechtsanwälte

(56) References cited:
- US-A1- 2006 153 122
- US-A1- 2013 201 978

## Description

### BACKGROUND OF THE INVENTION

### 1. Field of the Invention

The invention is generally related to a management method for a backhaul network, more particularly, to a system and a method for backhaul connection management that manages the connection permission for a user in a LAN.

### 2. Description of Related Art

In general, conventional communication services such as network connection, electronic mail, file downloading and uploading are implemented through a Local Area Network (LAN). A user computer in the LAN establishes a connection with a router or a switch in a first step. The router can transfer packets to an external network. The LAN indicates an Ethernet or a wireless local area network (WLAN).

Generally speaking, a LAN is disposed with an access point, abbreviated as 'AP', that acts as a hot spot. This AP can be a server that serves to allocate IP addresses. A user computer with an IP address in the LAN connects with this AP and establishes a connection to an external network via the AP. The AP accordingly serves as a DSL-based or cable-based modem.

One of the services provided by a wireless LAN (WLAN) is to allow an end user to obtain a permission to connect with the external network by logging into a related domain. For example, when a user computer connects with the WLAN via the hot spot, a server may be provided in the LAN for managing the connection made by the end user to the network. Firstly, a software-implemented tool resolves the connection packets, and obtains user data from the packets. The signals carried in the connection packets allow the tool to determine the connection permission.

For example, a company employee who is a registered user for a WLAN service can obtain permission to access the company's internal network with an account and a password. The account and the password give the user permission to access the data in the internal network via the WLAN. However, if a user is a guest who is not a registered user with the permission, the user can still access the WLAN with a guest account. When a server in the WLAN verifies this guest account, the connection permission associated with the guest account will be restricted. For example, the server can restrict the user from accessing the internal network of the company, but not from the Internet.

A LAN may include a plurality of APs that form a network system allowing an internal user computer to access a core packet data network. The plurality of APs form a backhaul network that provides a management mechanism for the user computer to access the core packet data network.

The backhaul network is used to transfer data flow created by a terminal, e.g. the user computer, in the LAN to a specific node. The terminal can then connect to the core packet data network. This core packet data network is such as an enterprise Intranet, or a LAN with a specific security mechanism. To a technique of mobile communication, the backhaul network of a mobile station transmits the packets between the mobile station and the mobile device to a specific wireless node, and then transfers the packets to the core packet data network. US 2006/153 122 A1 shows another design.

### SUMMARY OF THE INVENTION

According to the present invention, a method as defined by claim 1 is provided. A system according to the present invention is defined in claim 5. The dependent claims show some examples of such a method. The present disclosure is related to a method for backhaul connection management in a LAN. The method is adapted to a WLAN. The LAN includes a plurality of APs that form a backhaul network. The backhaul network forms a system that provides a service to connect with a network. The backhaul network transfers the connection made by a user computer to a specific node. The destination node is such as a master AP that acts as a gateway for directing data flow to an internal network or the other external network.

A master AP can be determined from the plurality of APs in the backhaul network through a management protocol. The master AP can receive a connection request made by a user device from any AP in the network. Then, the master AP establishes a connection in response to the request. In the process, the master AP obtains user data from the connection request, and the user data includes a user ID and an SSID associated with a set of connection settings. Connection permission with respect to the request can be confirmed according to the user ID and the SSID. According to the connection permission, the master AP directs the connection to an internal network or an external network.

In one embodiment, if the SSID retrieved from the user data is a guest SSID, the master AP directs the data flow generated by the user device to a network with lower security level. If the SSID is a backhaul SSID associated with the backhaul network, the master AP will direct the data flow to a network with higher security level.

According to the system for backhaul connection management in a LAN, the system is such as a backhaul network including a plurality of APs. One of the plurality of APs can be set as a master AP. The system includes at least two networks with two different security levels. The system performs the method for the backhaul connection management.

### BRIEF DESCRIPTION OF THE DRAWINGS

Fig. 1 shows a flow chart describing an operating method of the system for backhaul connection management in a LAN in one embodiment of the present disclosure;
Fig. 2 shows a schematic diagram describing a framework of a system for backhaul connection management in one embodiment of the present disclosure;
Fig. 3 shows a schematic diagram depicting the system in one embodiment of the present disclosure;
Fig. 4 shows a schematic diagram depicting the system implementing a backhaul network according to the embodiment of the present disclosure;
Fig. 5 shows a flow chart describing the method for backhaul connection management in one embodiment of the present disclosure; and
Fig. 6 shows another flow chart describing the method for backhaul connection management in one further embodiment of the present disclosure.

### DETAILED DESCRIPTION OF THE PREFERRED EMBODIMENTS

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

According to one aspect of the present disclosure, a system and a method for backhaul connection management in a LAN is provided. A network topology created by the system can be functioned under a layer 2 (L2, IEEE 1905.1) or a layer 3 (L3, socket interface) of the seven-layer OSI model of network communication protocol.

In one embodiment, within a Local Area Network (LAN), an Access Point (AP) that is in charge of allocating network addresses, e.g. IP addresses, or any service of network identification can be identified according to the information of packets exchanged among the multiple APs in the LAN. The mentioned service of network address allocation is such as a DHCP (Dynamic Host Configuration Protocol) service. The AP can be set as a master AP for the LAN under a management mechanism for managing other APs. According to another embodiment, the AP that renders a TR-069 service can also be set as the master AP under the LAN management mechanism. Optionally, the system can rely on the unique hardware information of every AP based on a specific rule to decide the master AP. For example, the system can rely on one or any combination of factors selected from Media Access Control (MAC), a system time, a neighbor list, a processor capability, a network data rate, etc., to decide the master AP.

The disclosure system and the method are primarily adapted to the LAN including the plurality of APs. The LAN is exemplarily a wireless LAN (WLAN). The APs act as the plurality of nodes that serve the terminals in the LAN to transfer data flow to other network domains, e.g. the Internet. The nodes can be a hot spot, a web sharing device, a router, or a gateway. The master AP acts as an administrator that governs the operations of the other APs in the LAN. The scenario allows the master AP to efficiently manage operation of the whole LAN. By the management mechanism, in an exemplary example, the master AP can instruct one of the APs in the LAN to share the work load of another AP that is experiencing network congestion. Therefore, a function of load balancing or redundancy can be achieved in the LAN. In one further embodiment, the management mechanism allows the terminal in the LAN to perform a seamless hand-off process among the different APs.

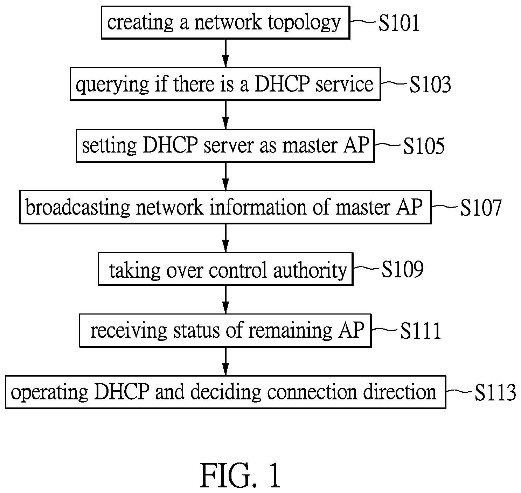

Reference is made to Fig. 1, showing a flow chart describing the method of backhaul connection management in a LAN in one embodiment of the present disclosure.

It is noted that the AP supports a specific management protocol that can be implemented by software, firmware, or a circuitry in the device. The management protocol allows the APs to perform functions such as exchanging packet information among the APs nearby, and to confirm if any AP is in charge of providing service of network address allocation in the LAN. Under the management protocol, the AP found to serve the network address allocation can be set as the master AP in the LAN. Further, the management protocol recognized by the APs also allows the APs in the LAN to record a network address of the master AP, and accordingly transmit information to the master AP.

According to one embodiment, the management protocol governs the operations performed by the APs to configure the master AP in an initial stage. In the beginning, as in step S101, a network topology of the LAN is created, in which the plurality of APs are able to acknowledge the topology of the whole LAN through the exchanged packet information. Next, such as in step S103, the APs query if there is any access point in charge of providing the service of network address allocation, e.g. the DHCP service, in the LAN by inspecting packet information exchanged among the plurality of access points. After that, every AP broadcasts packets over the LAN when it is connected to this LAN. The AP searches the nearby network nodes through the broadcasted packets. The AP also issues a request for asking for the service of identification in the LAN, e.g. the network address allocation. In practice, DHCP or BOOTP can provide the service of allocating network addresses for the APs.

Next, in step S105, it is confirmed that there is one AP in charge of providing the service of allocating the network address from the packet information that is extracted from the packets broadcasted and received by the APs. In an exemplary example, the AP issues a DHCP request to the LAN for requesting service of the DHCP. In one aspect of the disclosure, when any AP responds to the request made by other APs, the management protocol allows the APs to designate a master AP that serves the DHCP service in the LAN, e.g. a backhaul network.

The master AP can broadcast information to the APs in the LAN, for example, informing its network information to the APs, such as in step S107. The management protocol allows the APs to obtain the network address of the master AP, by which the information generated by the AP can be delivered to the master AP.

Next, in step S109, in addition to broadcasting the master AP's network information to the other APs, the master AP administrates the APs through the mentioned management protocol among the APs. Such as step S111, the master AP retrieves the operating information of the APs. In step S113, the master AP renders services at least including access authentication in the LAN, e.g. the backhaul network, according to a user ID, and deciding connection orientation, besides the aforementioned service of network address allocation.

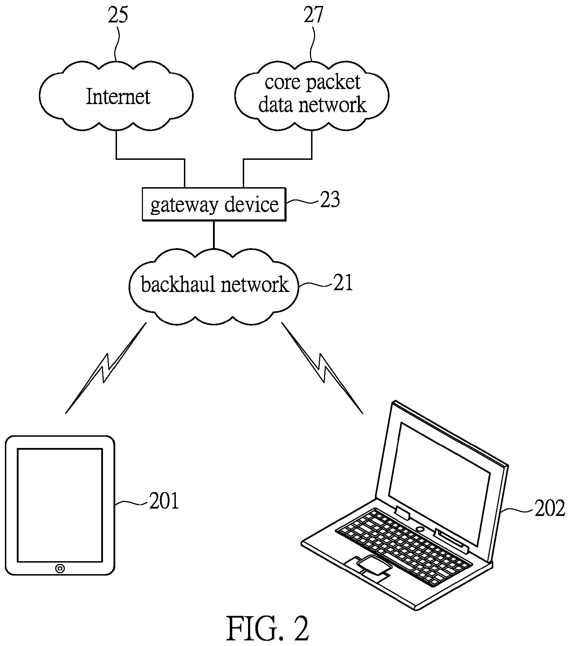

The method for backhaul connection management in the LAN according to one aspect of the invention is to operate the WLAN including the plurality of wireless APs. Fig. 2 shows a schematic diagram depicting a framework of a LAN that is under a backhaul connection management.

In the diagram, the system including the plurality of APs acts as a backhaul network 21 that operates in the WLAN. The user devices 201 and 202 in the WLAN connect to a network via a gateway device 23 through a connection service provided by the backhaul network 21. The target network is such as a core packet data network 27 or an external network, e.g. Internet 25. The core packet data network 27 is exemplarily an intranet or a LAN secured by a specific security mechanism. The gateway device 23 is such as a router that performs a packet routing service.

If the coverage of LAN is required to be expanded, a new AP can be added to this backhaul network 21. The topology of the backhaul network 21 is changed when the new AP is added. A management mechanism allows the system to be expandable since it can re-define the master AP and the APs controlled by the master AP in response to a change of the topology. The APs in the backhaul network 21 are interconnected through a specific wireless communication protocol. Therefore, certain safety measures such as redundancy and failover can be implemented. The APs can be well identified by their individual IDs, e.g. the AP IDs. The APs constituting the backhaul network 21 can commonly have an identification code, namely a SSID (Service Set Identifier, SSID), that can be recognized by the end user devices 201, 202.

The scenario of SSID allows a wireless LAN to be divided into more than one sub-net that requires another individual identification code. Every sub-net has a unique SSID for distinguishing from other sub-net(s). The plurality of APs in the backhaul network 21 broadcasts the SSID associated to the network 21 for providing a service of network connection that allows the user device to link to one of the APs by setting up the SSID. The user device utilizes a program to scan the area covered by the wireless signals of WLAN so as to acquire the SSID associated to the LAN. The user device can successfully connect with one of the APs using the SSID. Alternatively, in another aspect, the user device can manually set up the SSID for having the same network service since the APs may not broadcast the SSID.

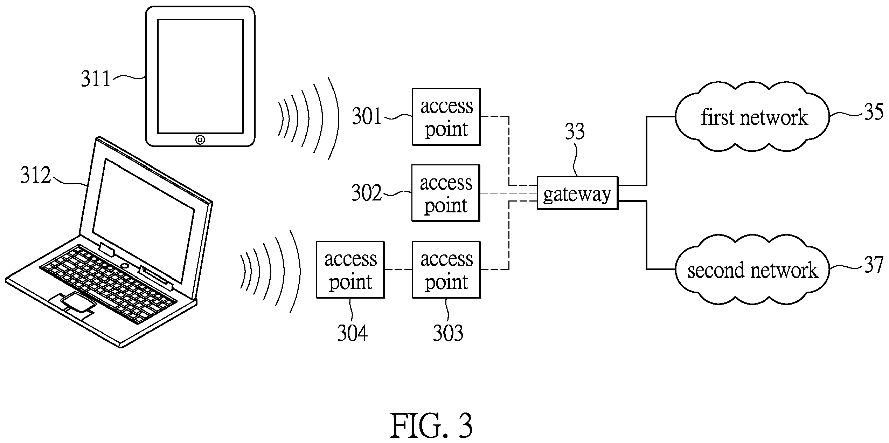

Reference is next made to Fig. 3; a system for backhaul connection management in the LAN is exemplarily described.

In the diagram, a plurality of APs 301, 302, 303, 304 and a gateway 33 constitute a backhaul network that renders a service of network connection for one or more user devices 311 and 312. The network service allows the data flow generated by the user devices 311 and 312 to be transmitted to a network. In one of the embodiment, the APs 301, 302, 303 and 304 in the WLAN constitute a backhaul network that implements the system for backhaul connection management. The backhaul network connects to the gateway 33. The gateway 33 can be included in the backhaul network. A master AP in the WLAN acts as the gateway 33 for the backhaul network to link to the target network. The target network can be two types of the networks with different security levels, for example, the shown first network 35 and second network 37. The first network 35 and the second network 37 respectively represent two networks with two types of access authorities. For example, the second network 37 can be the core packet data network that only permits access for registered users; the first network 35 can be the Internet that permits access for general guests.

The APs 301, 302, 303 and 304 are interconnected by a wireless communication in compliance with a specific communication protocol, e.g. WiFi^{™}, or Ethernet. The APs 301, 302, 303 and 304 constitute the backhaul network rendering the network service using an SSID. In one embodiment, the gateway 33 is connected with the APs 301, 302, 303 and 304 by a wireless connection in compliance with a specific wireless communication protocol. This communication protocol can also be WiFi^{™}, Ethernet or the like. The gateway 33 can also be one of the APs in the backhaul network. This AP is preferably the master AP designated from the APs (301, 302, 303, and 304) in the backhaul network through a management protocol. The master AP has the same SSID as other APs in the same backhaul network.

It is worth noting that the backhaul network is an expandable network that allows adding of a new access point. When any new AP has been added, the master AP of the backhaul network acknowledges this change through the broadcast packets in the LAN since the broadcast packets carry an original SSID of the new AP. The SSID is originally stored in a memory of the APs. Next, the master AP issues the SSID designated to the backhaul network to the new AP and requests an update of its SSID. After the SSID set in the new AP has been updated, the updated SSID is also stored in the memory of the new AP. In general, the APs will be asked to reboot the device or re-activate its network service. The new AP can thereby successfully communicate with the other APs since they have the same SSID.

According to one further embodiment, the backhaul network operating in the system for backhaul connection management can provide two or more SSIDs. In an exemplary example, the SSIDs set in the backhaul network can be a backhaul SSID and a guest SSID that allow the end user to choose according his permission. When the user chooses the backhaul SSID on his computer, the user is optionally required to input his user authentication data, e.g. the user account and password. After the master AP successfully authenticates the user, the registered user obtains his connection permission to link to the first network 35 and/or to second network 37. On the other hand, the user can choose to use the guest SSID on his computer, and the guest SSID may or may not require authentication. The connection permission associated to the guest SSID may allow the user to access the first network 35 rather than the second network 37.

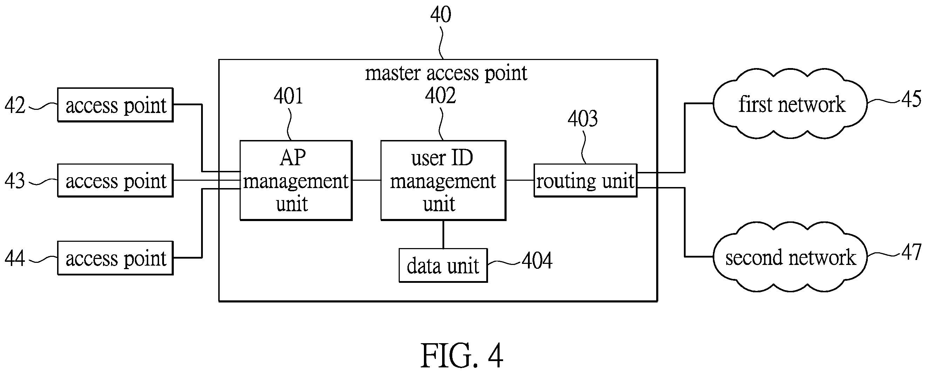

Fig. 4 shows a schematic diagram depicting a backhaul network implemented by the system for backhaul connection management in the LAN in one embodiment of the disclosure.

The shown APs 40, 42, 43 and 44 constitute a backhaul network that allows a user device to link to other networks. By a management protocol, a master AP 40 can be determined. The master AP 40 can generally act as the AP in charge of allocating network addresses in the LAN. Further, the master AP 40 acts as a gateway or a router that allows the user device to link to a first network 45 or a second network 47.

In the master AP 40, several functional modules that are software-implemented or in cooperation with hardware/circuits are included. In the present embodiment, an AP management unit 401 used to manage the access points 42, 43 and 44 in the LAN is provided. Through the management mechanism made by the master AP 40, in addition to setting up the SSID to the APs 42, 43, 44, the APs 42, 43 and 44 can commonly share the network work to, for example, achieve load balance, redundancy or failover. The master AP 40 also processes the hand-off procedure among the APs 42, 43 and 44. It is noted that all of the APs 42, 43 and 44 record identification data including a network address of the master AP 40. When any of the APs 42, 43 and 44 receives a connection request sent by the user device, the connected AP receives information of SSID and user data, e.g. the authentication data, from the connection request, and the AP delivers the user data to the master AP 40.

A user ID management unit 402 of the master AP 40 is used to manage the end users. The master AP 40 uses its memory or a data unit 404 to maintain an authority list that records the registered users and corresponding user authorities. The user ID management unit 402 authenticates the user based on the received user data. The authority list allows the master AP 40 to determine the user's connection permission based on the user data. The user data also records an SSID relating to the connection settings. The master AP 40 uses the SSID recorded in the user data to determine if the user is authorized to connect to a target network. The user ID management unit 402 can confirm the user's connection permission, and a routing unit 403 is used to decide a connection path.

In one embodiment, the first network 45 can be a guest-accessible network; the second network 47 can be a network that only allows the registered users to access. For example, when the user ID management unit 402 recognizes that the user has the guest SSID, the routing unit 403 directs the related data flow to the first network 45. When the user ID management unit 402 recognizes that the connection setting in the user data is directed to the backhaul SSID, the routing unit 403 directs the data flow to the first network 45 or to the second network 47 according to the destination set by the user.

The data unit 404 is such as a form of database. The data unit 404 stores an authority list that records the registered users. Every registered user is associated to an authority to access a specific network resource. The user ID management unit 402 determines every user's connection permission based on the authority list.

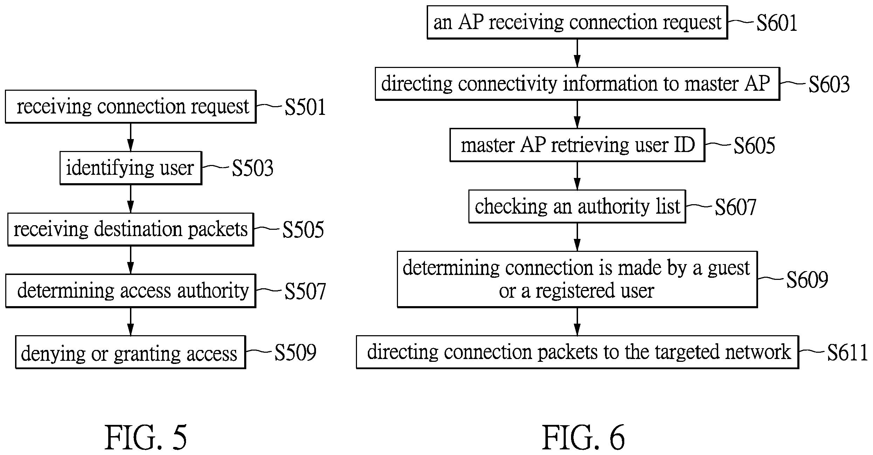

Fig. 5 shows a flow chart describing a method for backhaul connection management implemented in a backhaul network according to one of the embodiments in the disclosure.

A backhaul network is established in a LAN. The backhaul network allows the data flow generated by the terminal device in the LAN to be delivered to a specific network via a gateway. The backhaul network can segment the existing network into the networks with different security levels, e.g. a network with higher security level, and another network with lower security level. For example, the core network of an enterprise should be a high security network, otherwise , a lower security network such as the Internet may be applied.

The backhaul network has a master AP. In step S501, the master AP of the backhaul network firstly receives a connection request generated by a user device. The connection request carries the user data such as a connection source, a destination, a user ID, and/or an SSID. The master AP then performs management of connection permission. In step S503, the master AP performs user identification for identifying the user and confirming his connection permission. In step S505, the master AP can receive destination packets from the user device via an AP (or the master AP itself) in the backhaul network. In step S507, according to the user ID and the SSID, the master AP determines an access authority for the user. In the meantime, such as in step S509, the master AP, through software or in cooperation with hardware, will deny or grant the connection request. The connection will be directed to a destination, e.g. a target network such as a LAN or Internet, in the request in compliance with the connection permission.

In Fig. 6, a flow chart is used to describe the method for backhaul connection management in one embodiment of the disclosure. The master AP will determine the direction of the connection requested by the user according to the user ID and the SSID in the connection settings.

In the beginning, such as in step S601, an AP of the backhaul network receives a connection request made by a user device. Under a management protocol, such as in step S603, the AP directs the received connectivity information to a master AP of the backhaul network. In step S605, the master AP retrieves user ID from the connectivity information. In step S607, by the master AP, the user ID is used to check an authority list maintained in the master AP. In step S609, the SSID recorded in the connection settings allows the master AP to determine whether the connection is made by a guest or a registered user. In step S611, the master AP directs the connection packets to a target network.

According to the method for backhaul connection management in one embodiment, the backhaul network directs the data flow via a node, e.g. a gateway, to a guest-accessible general network while the connection setting is configured to be a guest SSID. The guest SSID is generally associated to the destination network with a lower security level, for example, the Internet. On the contrary, if the connection setting is configured to be a backhaul SSID, the user can gain connection permission to a specific network. Meanwhile, the master access point directs the data flow generated by the user device to the target network with a higher security level.

Thus, provided in the disclosure is a system and a method for backhaul connection management in a LAN. The method is applied to a WLAN. The system operates as a backhaul network being constituted of a plurality of access points. In the method, the backhaul network allows the data flow generated by a terminal device to be directed to a target network via a specific node. The backhaul network conducts a management mechanism that manages the connection permission of the terminal device based on the SSID associated to a connection request.

It is intended that the specification and depicted embodiment be considered exemplary only, with a true scope of the invention being determined by the scope of the following claims.

## Claims

1. A method for backhaul connection management in a LAN, adapted to a wireless LAN, comprising:
implementing a backhaul network (21), including a plurality of access points (301, 302, 303, 304), wherein said access points (301, 302, 303, 304) are wirelessly interconnected in said backhaul network (21) by a common identification code;
a first target network (35) with a higher security level;
a second target network (37) with a lower security level;
a gateway (33), linking said backhaul network (21) to said first target network (35) or second target network (37); and
a user device (201, 202), establishing a communication with said backhaul network (21) by a second identification code which is different from said common identification code;
setting the gateway (33) as a master access point (40) , wherein the master access point (40) acts as the access point that performs a service of network address allocation in the backhaul network (21), and the master access point (40) includes a data unit (404) and a user ID management unit (402);
wherein the data unit (404) stores an authority list that records a plurality of registered users and a plurality of user data corresponding to each of said plurality of registered users respectively, and the user data includes at least a user identifier, ID, and a service set identifier, SSID, relating to a set of connection settings;
wherein each of said plurality of registered users sends a connection request having the user data by the user device(201, 202), when establishing the communication with said backhaul network (21), said user ID management unit (402) determines the connection permission of said user device (201, 202) based on said authority list, and if the connection permission is authenticated, said user device (201, 202) is granted to access one of said first target network (35) and second target network (37).

2. The method as recited in claim 1, wherein the master access point (40) is designated by steps of:
creating a network topology in the wireless LAN, and querying if there is any access point in charge of providing the service of network address allocation in the wireless LAN by inspecting packet information exchanged among the plurality of access points (301, 302, 303, 304);
confirming that there is one access point in charge of providing the service of allocating the network address from the packet information; and
designating the access point as the master access point (40).

3. The method as recited in claim 1, wherein, a connection of the communication is made by a guest or one of the registered users, when the connection is made by the guest, the master access point (40) directs data flow generated by the user device (201, 202) to the target network (35, 37) with lower security level; when the connection is made by one of the registered users, the master access point (40) directs data flow generated by the user device (201, 202) to the target network (35, 37) with higher security level.

4. The method as recited in claim 1, wherein the user data includes a user ID and a SSID relating to the connection permission, wherein the SSID is a guest SSID.

5. A system for backhaul connection management in a LAN, adapted to a wireless LAN, comprising:
a backhaul network (21) including a plurality of access points (301, 302, 303, 304), wherein
said access points (301, 302, 303, 304) are wirelessly interconnected in said backhaul network (21) by a common identification code;
a first target network (35) with higher security level;
a second target network (37) with lower security level;
a gateway (33), being adapted to link
said backhaul network (21) to said first target network (35) or second target network (37); and
a user device (201, 202), being adapted to establish a communication with said backhaul network (21) by a second identification code which is different from said common identification code;
wherein the gateway(33) is set as the master access point (40) and the master access point (40) includes a data unit (404) and a user ID management unit (402), a data unit (404) is adapted to store an authority list that records a plurality of registered users and a plurality of user data corresponding to each of said plurality of registered users respectively, and the user data includes at least a user identifier, ID, and a service set identifier, SSID, relating to a set of connection settings; and
wherein one of the registered users is adapted to send a connection request having the user data by the user device(201, 202), when establishing the communication with said backhaul network (21), said user ID management unit (402) is adapted to determine the connection permission of said user device (201, 202) based on said authority list, and if the connection permission is authenticated, said user device (201, 202) is granted to access one of said first target network (35) and second target network (37).

## Patentansprüche

1. Verfahren zur Backhaul-Verbindung-Verwaltung in einem LAN, welches an ein drahtloses LAN angepasst ist und aufweist:
Implementieren eines Backhaul-Netzwerks (21), welches aufweist:
mehrere Zugangspunkte (301, 302, 303, 304), wobei die besagten Zugangspunkte (301, 302, 303, 304) in dem besagten Backhaul-Netzwerk (21) mittels eines gemeinsamen Identifikationscodes in drahtloser Weise miteinander verbunden sind;
ein erstes Zielnetzwerk (35) mit einer höheren Sicherheitsstufe;
ein zweites Zielnetzwerk (37) mit einer niedrigeren Sicherheitsstufe;
ein Gateway (33), welches das besagte Backhaul-Netzwerk (21) mit dem besagten ersten Zielnetzwerk (35) oder dem besagten zweiten Zielnetzwerk (37) verbindet; und
eine Benutzervorrichtung (201, 202), welche eine Kommunikation mit dem besagten Backhaul-Netzwerk (21) mittels eines zweiten Identifikationscodes herstellt, welcher sich von dem besagten gemeinsamen Identifikationscode unterscheidet;
Einstellen des Gateways (33) als einen Master-Zugangspunkt (40), wobei der Master-Zugangspunkt (40) als der Zugangspunkt fungiert, welcher einen Netzwerkadressenzuweisungsdienst in dem Backhaul-Netzwerk (21) durchführt, und wobei der Master-Zugangspunkt (40) eine Daten-Einheit (404) und eine Benutzer-ID-Verwaltung-Einheit (402) aufweist;
wobei die Daten-Einheit (404) eine Berechtigungsliste speichert, welche mehrere registrierte Benutzer und mehrere Benutzerdaten, welche in jeweils zugeordneter Weise mit jedem von den mehreren registrierten Benutzern korrespondieren, aufzeichnet, und wobei die Benutzerdaten mindestens einen Benutzer-Identifikator, ID, und einen Service-Set-Identifikator, SSID, aufweisen, welcher sich auf ein Set von Verbindungseinstellungen bezieht;
wobei jeder von den mehreren registrierten Benutzern eine Verbindungsanfrage, welche die Benutzerdaten hat, mittels der Benutzervorrichtung (201, 202) sendet, wenn die Kommunikation mit dem besagten Backhaul-Netzwerk (21) hergestellt wird, wobei die Benutzer-ID-Verwaltung-Einheit (402) die Verbindungserlaubnis der besagten Benutzervorrichtung (201, 202) basierend auf der Berechtigungsliste ermittelt, und wobei, wenn die Verbindungserlaubnis authentifiziert ist, es der besagten Benutzervorrichtung (201, 202) gestattet wird, auf eines von dem besagten ersten Zielnetzwerk (35) und dem besagten zweiten Zielnetzwerk (37) zuzugreifen.

2. Verfahren gemäß Anspruch 1, wobei der Master-Zugangspunkt (40) mittels der folgenden Schritte festgelegt wird:
Erzeugen einer Netzwerktopologie in dem drahtlosen LAN, und Anfragen, ob es irgendeinen Zugangspunkt gibt, welcher für das Bereitstellen des Netzwerkadressenzuweisungsdienstes in dem drahtlosen LAN zuständig ist, mittels Untersuchens der Paketinformationen, welche zwischen den mehreren Zugangspunkten (301, 302, 303, 304) ausgetauscht werden;
Bestätigen, dass es einen Zugangspunkt gibt, welcher für das Bereitstellen des Netzwerkadressenzuweisungsdienstes zuständig ist, aus den Paketinformationen; und
Festlegen des Zugangspunktes als den Master-Zugangspunkt (40).

3. Verfahren gemäß Anspruch 1, wobei eine Verbindung der Kommunikation durch einen Gast oder einen von den registrierten Benutzern hergestellt wird, wobei, wenn die Verbindung durch den Gast hergestellt wird, der Master-Zugangspunkt (40) den Datenstrom, welcher mittels der Benutzervorrichtung (201, 202) erzeugt wird, hin zu dem Zielnetzwerk (35, 37) mit niedrigerer Sicherheitsstufe lenkt; wobei, wenn die Verbindung durch einen von den registrierten Benutzern hergestellt wird, der Master-Zugangspunkt (40) den Datenstrom, welcher mittels der Benutzervorrichtung (201, 202) erzeugt wird, hin zu dem Zielnetzwerk (35, 37) mit höherer Sicherheitsstufe lenkt.

4. Verfahren gemäß Anspruch 1, wobei die Benutzerdaten einen Benutzer-ID und einen SSID aufweisen, welche sich auf die Verbindungserlaubnis beziehen, wobei der SSID ein Gast-SSID ist.

5. System zur Backhaul-Verbindung-Verwaltung in einem LAN, welches an ein drahtloses LAN angepasst ist und aufweist:
ein Backhaul-Netzwerk (21), welches mehrere Zugangspunkte (301, 302, 303, 304) aufweist, wobei die besagten Zugangspunkte (301, 302, 303, 304) in dem besagten Backhaul-Netzwerk (21) in drahtloser Weise mittels eines gemeinsamen Identifikationscodes miteinander verbunden sind;
ein erstes Zielnetzwerk (35) mit höherer Sicherheitsstufe;
ein zweites Zielnetzwerk (37) mit niedrigerer Sicherheitsstufe;
ein Gateway (33), welches angepasst ist, um das Backhaul-Netzwerk (21) mit dem besagten ersten Zielnetzwerk (35) oder dem besagten zweiten Zielnetzwerk (37) zu verbinden; und
eine Benutzervorrichtung (201, 202), welche angepasst ist, um eine Kommunikation mit dem besagten Backhaul-Netzwerk (21) mittels eines zweiten Identifikationscodes herzustellen, welcher sich von dem gemeinsamen Identifikationscode unterscheidet;
wobei das Gateway (33) als der Master-Zugangspunkt (40) eingestellt ist und der Master-Zugangspunkt (40) eine Daten-Einheit (404) und eine Benutzer-ID-Verwaltung-Einheit (402) aufweist, wobei eine Daten-Einheit (404) angepasst ist, um eine Berechtigungsliste zu speichern, welche mehrere registrierte Benutzer und mehrere Benutzerdaten aufzeichnet, welche in jeweils zugeordneter Weise mit jedem von den mehreren registrierten Benutzern korrespondieren, und wobei die Benutzerdaten mindestens einen Benutzer-Identifikator, ID, und einen Service-Set-Identifikator, SSID, aufweisen, welcher sich auf ein Set von Verbindungseinstellungen bezieht; und
wobei einer von den registrierten Benutzern angepasst ist, um eine Verbindungsanfrage, welche die Benutzerdaten hat, mittels der Benutzervorrichtung (201, 202) zu senden, wenn die Kommunikation mit dem besagten Backhaul-Netzwerk (21) hergestellt wird, wobei die besagte Benutzer-ID-Verwaltung-Einheit (402) angepasst ist, um die Verbindungserlaubnis der besagten Benutzervorrichtung (201, 202) basierend auf der besagten Berechtigungsliste zu ermitteln, und wobei, wenn die Verbindungserlaubnis authentifiziert ist, es der Benutzervorrichtung (201, 202) gestattet wird, auf eines von dem besagten ersten Zielnetzwerk (35) und dem besagten zweiten Zielnetzwerk (37) zuzugreifen.

## Revendications

1. Procédé de gestion de connexion backhaul dans un LAN adapté à un LAN sans fil, comprenant :
la mise en œuvre d'un réseau backhaul (21) comprenant une pluralité de points d'accès (301, 302, 303, 304), lesdits points d'accès (301, 302, 303, 304) dans ledit réseau backhaul (21) étant interconnectés de manière sans fil au moyen d'un code d'identification commun ;
un premier réseau cible (35) avec un niveau de sécurité plus élevé ;
un deuxième réseau cible (37) avec un niveau de sécurité inférieur ;
une passerelle (33) reliant ledit réseau backhaul (21) audit premier réseau cible (35) ou audit deuxième réseau cible (37) ; et
un dispositif utilisateur (201, 202) établissant une communication avec ledit réseau backhaul (21) au moyen d'un deuxième code d'identification qui est différent dudit code d'identification commun ;
la définition de la passerelle (33) comme point d'accès maître (40), le point d'accès maître (40) fonctionnant comme le point d'accès qui effectue un service d'attribution d'adresse de réseau dans le réseau backhaul (21), et le point d'accès maître (40) comprenant une unité de données (404) et une unité de gestion d'ID d'utilisateur (402) ;
dans lequel l'unité de données (404) stocke une liste d'autorisation qui enregistre une pluralité d'utilisateurs enregistrés et une pluralité de données d'utilisateur correspondant respectivement à chacun de ladite pluralité d'utilisateurs enregistrés, et dans lequel les données d'utilisateur comprennent au moins un identifiant d'utilisateur, ID, et un identifiant d'ensemble de services, SSID, rapportant à un ensemble de paramètres de connexion ;
dans lequel chacun de ladite pluralité d'utilisateurs enregistrés envoie une demande de connexion ayant les données d'utilisateur par l'intermédiaire du dispositif utilisateur (201, 202) lorsque la communication est établie avec ledit réseau backhaul (21), ladite unité de gestion d'ID d'utilisateur (402) détermine l'autorisation de connexion dudit dispositif utilisateur (201, 202) sur la base de ladite liste d'autorisation, et si l'autorisation de connexion est authentifiée, ledit dispositif utilisateur (201, 202) est autorisé à accéder à l'un dudit premier réseau cible (35) et dudit deuxième réseau cible (37).

2. Procédé selon la revendication 1, dans lequel le point d'accès maître (40) est désigné par les étapes suivantes :
la création d'une topologie de réseau dans le LAN sans fil, et la demande s'il existe un point d'accès quelconque responsable de la fourniture du service d'attribution d'adresse de réseau dans le LAN sans fil en examinant des informations de paquet échangées entre la pluralité de points d'accès (301, 302, 303, 304) ;
la confirmation qu'il existe un point d'accès responsable de la fourniture du service d'attribution de l'adresse de réseau à partir des informations de paquet ; et
la désignation du point d'accès comme étant le point d'accès maître (40).

3. Procédé selon la revendication 1, dans lequel une connexion de la communication est établie par un invité ou par l'un des utilisateurs enregistrés, lorsque la connexion est établie par l'invité, le point d'accès maître (40) dirige le flux de données généré par le dispositif utilisateur (201, 202) vers le réseau cible (35, 37) avec un niveau de sécurité inférieur ; lorsque la connexion est établie par l'un des utilisateurs enregistrés, le point d'accès maître (40) dirige le flux de données généré par le dispositif utilisateur (201, 202) vers le réseau cible (35, 37) de niveau de sécurité plus élevé.

4. Procédé selon la revendication 1, dans lequel les données d'utilisateur comprennent un ID d'utilisateur et un SSID qui se rapportent à l'autorisation de connexion, le SSID étant un SSID d'invité.

5. Système de gestion de connexion backhaul dans un LAN, adapté à un LAN sans fil, comprenant :
un réseau backhaul (21) comprenant une pluralité de points d'accès (301, 302, 303, 304), dans lequel
lesdits points d'accès (301, 302, 303, 304) sont interconnectés de manière sans fil dans ledit réseau backhaul (21) au moyen d'un code d'identification commun ;
un premier réseau cible (35) avec un niveau de sécurité plus élevé ;
un deuxième réseau cible (37) avec un niveau de sécurité inférieur ;
une passerelle (33) adaptée pour relier ledit réseau backhaul (21) audit premier réseau cible (35) ou audit deuxième réseau cible (37) ; et
un dispositif utilisateur (201, 202) adapté pour établir une communication avec ledit réseau backhaul (21) au moyen d'un deuxième code d'identification qui est différent dudit code d'identification commun ;
dans lequel la passerelle (33) est établie comme le point d'accès maître (40) et le point d'accès maître (40) comprend une unité de données (404) et une unité de gestion d'ID d'utilisateur (402), une unité de données (404) est adaptée pour stocker une liste d'autorisation qui enregistre une pluralité d'utilisateurs enregistrés et une pluralité de données d'utilisateur, correspondant respectivement à chacun de ladite pluralité d'utilisateurs enregistrés, et les données d'utilisateur comprennent au moins un identifiant d'utilisateur, ID, et un identifiant d'ensemble de services, SSID, se rapportant à un ensemble de paramètres de connexion ; et
dans lequel l'un des utilisateurs enregistrés est adapté pour envoyer une demande de connexion ayant les données d'utilisateur au moyen du dispositif utilisateur (201, 202) lorsque la communication avec ledit réseau backhaul (21) est établie, dans lequel ladite unité de gestion d'ID d'utilisateur (402) est adaptée pour déterminer l'autorisation de connexion dudit dispositif utilisateur (201, 202) sur la base de ladite liste d'autorisation, et si l'autorisation de connexion est authentifiée, ledit dispositif utilisateur (201, 202) est autorisé à accéder à l'un parmi ledit premier réseau cible (35) et ledit second réseau cible (37).
